(19) **Europäisches Patentamt / European Patent Office / Office européen des brevets**

(11) **EP 3 895 064 B1**

(12) **EUROPEAN PATENT SPECIFICATION**

(45) Date of publication and mention
of the grant of the patent:
**11.01.2023 Bulletin 2023/02**

(21) Application number: **20786271.5**

(22) Date of filing: **01.10.2020**

(51) International Patent Classification (IPC):
*G06V 10/44* (2022.01)   *G06V 10/82* (2022.01)
*G06V 20/40* (2022.01)   *G06V 20/59* (2022.01)
*G06V 40/20* (2022.01)   *G06K 9/62* (2022.01)

(52) Cooperative Patent Classification (CPC):
**G06K 9/6271; G06V 10/454; G06V 10/82;
G06V 20/40; G06V 20/59; G06V 40/28**

(86) International application number:
**PCT/EP2020/077519**

(87) International publication number:
**WO 2021/083601 (06.05.2021 Gazette 2021/18)**

(54) **METHOD AND SYSTEM FOR TRIGGERING AN EVENT IN A VEHICLE**

VERFAHREN UND SYSTEM ZUR AUSLÖSUNG EINES EREIGNISSES IN EINEM FAHRZEUG

PROCÉDÉ ET SYSTÈME DE DÉCLENCHEMENT D'UN ÉVÈNEMENT DANS UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2019 IN 201941043899**

(43) Date of publication of application:
**20.10.2021 Bulletin 2021/42**

(73) Proprietor: **Mercedes-Benz Group AG
70372 Stuttgart (DE)**

(72) Inventors:
 • **GUPTA, Vikram
  Bengaluru 560066 (IN)**
 • **DWIVEDI, Sai Kumar
  Bangalore 560048 (IN)**
 • **AHMED, Shuaib
  Bengaluru 560066 (IN)**
 • **ARJUN, Jain
  Bangalore 560048 (IN)**

(74) Representative: **JENSEN & SON
366-368 Old Street
London EC1V 9LT (GB)**

(56) References cited:
**US-A1- 2016 203 360   US-A1- 2019 246 036
US-A1- 2019 251 702**

• **OPREA S ET AL: "A recurrent neural network
based Schaeffer gesture recognition system",
2017 INTERNATIONAL JOINT CONFERENCE ON
NEURAL NETWORKS (IJCNN), IEEE, 14 May 2017
(2017-05-14), pages 425-431, XP033112051, DOI:
10.1109/IJCNN.2017.7965885 [retrieved on
2017-06-30]**

**Description**

**PREAMBLE TO THE DESCRIPTION:**

The following specification particularly describes the invention and the manner in which it is to be performed:

**DESCRIPTION OF THE INVENTION:**

**Technical field**

Present disclosure generally relates to automobiles. Particularly, the present disclosure relates to method and system for triggering an event in a vehicle based on a gesture of a user carried out by a hand.

**Background**

Generally, one or more conventional techniques are used in image processing for understanding gestures. The gestures may be captured as a video and the video is processed using trained models to recognise the gestures. The trained models may be neural networks models. The trained models may be implemented for identification and classification of a class from predefined classes for the gesture. Gesture identification techniques may be used in various real-time applications to perform various tasks or operations. It may be required that, when such techniques are implemented in a real-time application, performance and accuracy should not be compromised.

Some of the conventional techniques disclose to process predefined window of frames in the video captured which is captured to identify a gesture. Models implemented for such conventional techniques may be trained with Connectionist Temporal Classification (CTC) loss function. Said loss function, by its very nature, may not allow for control on when to predict the presence of the gesture. It is necessary that all frames in the predefined window are to be processed for detecting gesture. Thus, such techniques require higher processing time, causing delay or lag in predicting the gesture. This is an important aspect for most of the real life scenarios where fine control over triggering and the explainabilty of trigger point is required. Moreover, it is also helpful if the triggering points/thresholds can be configured even after the models are trained to save training time and provide more flexibility.

Some of other conventional techniques disclose to perform frame level prediction of hand gesture. Each frame of the video is processed individually. However, there may be possibility that even first frame of the video outputs high probability of prediction of hand gesture, leading to false predictions. The proposed method learns the gesture progression and allows to incorporate the level of progression of a gesture to enable more robust predictions. This would allow to suppress predictions unless the predefined threshold is reached. Noisy frames can also be suppressed using the threshold.

Form the article "A recurrent neural network base Schaeffer gesture recognition system" is known a Long-Short-Term Memory model reporting a high classification rate over a subset of Schaeffer gestures.

The disclosure of US 2019/251702 A1 provides methods, apparatus and systems for real-time gesture recognition processing of image frames associated with gestures using a recurrent neural network.

According the disclosure of US2019/246036 A1 is provided a computer-implemented method of acquiring visual data that comprises: determining, by one or more processors, a gaze point of a person in a vehicle; detecting, by the one or more processors, a gesture by the person in the vehicle; and in response to the detection of the gesture, causing, by the one or more processors, a camera to capture visual data corresponding to the gaze point of the person.

From US2016/203360 A1 is known a computer-implemented system that comprises an image capture device that captures images, a memory device that stores instructions, and at least one processor that executes the instructions stored in the memory device. The processor receives from the image capture device, at least one image including a gesture made by a user, analyzes the at least one image to identify the gesture made by the user in the at least one image using deep neural networks, and determines, based on the identified gesture, a first action to perform on the at least one image. When the gesture is a motion gesture, DNNs could be utilized to identify stages of the motion gesture, identifying values for each frame of a dynamic motion gesture

The information disclosed in this background of the disclosure section is only for enhancement of understanding of the general background of the invention and should not be taken as an acknowledgement or any form of suggestion that this information forms the prior art already known to a person skilled in the art.

**SUMMARY OF THE DISCLOSURE**

The invention as defined in claim 1 relates to a method for triggering an event in a vehicle, using a hand gesture.

Optional features are set out in claims 2 and 3.

The invention as defined in claim 4 relates an event triggering system for triggering an event in a vehicle, using a hand gesture.

In addition to the illustrative aspects, and features described above, further aspects, and features will become apparent by reference to the drawings and the following detailed description.

## BRIEF DESCRIPTION OF DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and regarding the accompanying figures, in which:

**Figure 1** shows exemplary environment of an event triggering system for triggering an event in a vehicle, in accordance with some embodiments of the present disclosure;

**Figure 2** shows a detailed block diagram of an event triggering system for triggering an event in a vehicle, in accordance with some embodiments of the present disclosure;

**Figures 3a-3h** illustrate exemplary embodiments for triggering an event in a vehicle, in accordance with some embodiments of present disclosure;

**Figure 4a** illustrates a flowchart showing an exemplary method for triggering an event in a vehicle, in accordance with some embodiments of present disclosure; and

**Figure 4b** illustrates a flowchart showing an exemplary method for identifying gesture progression and gesture class to be associated with predefined hand gesture, in accordance with some embodiments of present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether such computer or processor is explicitly shown.

## DETAILED DESCRIPTION

In the present document, the word "exemplary" is used herein to mean "serving as an example, instance, or illustration."

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the claims .

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The terms "includes", "including", or any other variations thereof, are intended to cover a non-exclusive inclusion, such that a setup, device or method that includes a list of components or steps does not include only those components or steps but may include other components or steps not expressly listed or inherent to such setup or device or method. In other words, one or more elements in a system or apparatus proceeded by "includes... a" does not, without more constraints, preclude the existence of other elements or additional elements in the system or method.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

Present disclosure teaches a method and system for triggering an event in a vehicle, using a hand gesture. The present disclosure may be implemented in interior of the vehicle to achieve real-time performance, with accurate predictions of hand gestures. Video of the hand gesture is captured, and each frame of the video is processed to extract features from the frames. Along with class of gesture associated with each frame, the present disclosure proposes to learn progression of gesture associated with each frame. Using the class and the progression, even before completion of the gesture by a user, accurate prediction of the hand gesture is achieved in real-time. Based on such predicted hand gesture, event is triggered in the vehicle by the system.

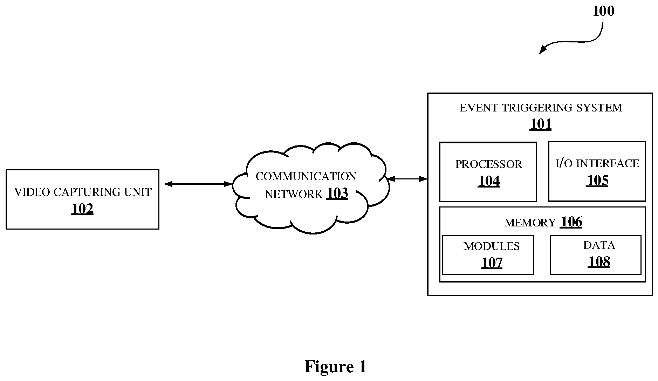

**Figure 1** shows an exemplary vehicle environment 100 for triggering an event in a vehicle, in accordance with some embodiments of the present disclosure. The exemplary vehicle environment 100 may be integral part of a vehicle. As shown in the figure 1, the exemplary vehicle environment 100 may include an event triggering system 101, a video capturing unit 102 and a communication network 103. The event triggering system 101 may be configured to trigger the event in the vehicle, based on hand gesture of a user in the vehicle, by performing steps as disclosed in the present disclosure. The user may at least one of driver and passenger inside the vehicle. The event triggering system 101 may be configured to trigger the event by using a video captured for the hand gesture. A gesture is a movement that a user makes with a part of his/her body, especially hands, to express emotion or information. In an embodiment, the vehicle may be a car, truck, van, or any other transportation means, which may be enabled to perform the at least one event based on hand gesture of hands of the driver or the passenger in the vehicle. The video capturing unit 102 may be configured to capture the video of the hand gesture of the user in interior of the vehicle. The video capturing unit 102 may be a camera, or any other device which may be configured to capture video of the interior of the vehicle. The video capturing unit 102 may be triggered to capture the video of the hand gesture. The trigger may be manually provided by the driver or the passenger. The video capturing unit 102 may be automatically triggered to capture the video of the hand gesture. For example, when a hand is identified in field of view of the video capturing unit 102, the video capturing unit 102 may be configured to record video of movement of the hand, to capture the hand gesture. One or more other triggers, capable of triggering the video capturing unit 102 for capturing the video of the hand gesture, may be used in the present disclosure.

The event triggering system 101 may include a processor 104, I/O interface 105 and a memory 106 The memory 106 may be communicatively coupled to the processor 104. The memory 106 may store processor executable instructions, which, on execution, may cause the processor 104 of the event triggering system 101 to trigger an event in the vehicle, based on detected hand gesture, as disclosed in the present disclosure. The memory 106 of the event triggering system 101 may include one or more modules 107 and data 108 for triggering the event. Each of the one or more modules 107 may be hardware modules, configured to perform the steps of the present disclosure. In an embodiment, each of the one or more modules 107 may be a hardware unit which may be outside the memory 106 and coupled with the event triggering system 101. The event triggering system 101 may be implemented in a semiconductor device such as, Field Programmable Gate Array (FPGA), and the like.

When a video of a hand gesture is captured by the video capturing unit 102, the captured video is communicated to the event triggering system 101, dynamically. That is, as soon as the video is captured by the video capturing unit 102, the video is transmitted to the event triggering system 101. The hand gesture may be performed by at least one of driver and passenger inside the vehicle. It may be required that the hand gesture is to be performed within the field of view of the video capturing unit 102. As known in the art, the captured video includes sequence of frames. Each of the sequence of frames represent corresponding static hand pose which is part of the hand gesture. The sequence of frames, put together, represent movement associated with hand, indicating the hand gesture. The event triggering system 101 may communicate with the video capturing unit 102 to receive the sequence of frames of the video, via the communication network 103 as shown in the **Figure 1.** The communication network 103 may include, without limitation, a direct interconnection, Control Area Network (CAN), Local Area Network (LAN), Wide Area Network (WAN), wireless network (e.g., using Wireless Application Protocol), the Internet, and the like. In an embodiment, the video capturing unit 102 may be integral part of the event triggering system 101 (not shown in figure). The video capturing unit 102 along with the event triggering system 101, may be integral part of the vehicle.

During capturing of the video, each of the sequence of frames may be dynamically communicated with the event triggering system 101. When each of the sequence of frames is received, the event triggering system 101 may be configured to process received frames for predicting a progression level and determining a gesture class of the hand gesture and accordingly, trigger an event based on the detected gesture class and the gesture progression level, as soon as a predetermined threshold of gesture progression is reached . As part of processing, the event triggering system 101 may be configured to extract spatio-temporal features from the sequence of frames received from the video capturing unit 102. In an embodiment, the spatio-temporal features may be extracted to capture characteristic shape and motion in the sequence of frames of the video. In an embodiment, the spatio-temporal features represent micro level details of hand poses in each of the sequence of frames. One or more techniques, known to a person skilled in the art, to extract the spatio-temporal features may be implemented in the event triggering system 101. In an embodiment, the event triggering system 101 uses a spatio-temporal encoder to extract the spatio-temporal features. In an embodiment, the spatio-temporal encoder includes a 3-Dimensional Convolutional Neural Network (3D-CNN) and Gated Recurrent Unit (GRU). The 3D-CNN may include, but not limited to, at least one of one or more 3D convolution layers, an activation layer, a maximum pooling layer, and one or more fully connected neural network layers. The GRU may be implemented to provision gating mechanism in the spatio-temporal encoder. The 3D-CNN along with the GRU, is configured to extract the spatio-temporal features of the sequence of frames.

Upon extracting the spatio-temporal features, the event triggering system 101 is configured to predict a gesture progression and to determine a gesture class associated to each of the sequence of frames. The prediction of gesture progression and the gesture class is determined based on the spatio-temporal features. The prediction of gesture progression and the gesture class are determined simultaneously for each of the sequence of frames. For example, the gesture progression and the gesture class for a first frame are determined simultaneously. Upon, predicting the gesture progression and determining the gesture class for the first frame, the prediction of the gesture progression and the gesture class for a second frame i.e., subsequent frame of the first frame, may be determined. In an embodiment, the extraction of the spatio-temporal features, and prediction of the gesture progression and determination of the gesture class of each of the sequence of frames may be performed in the sequential manner.

The gesture progression of a frame at a particular time indicates the rate of progression of the detected gesture till that frame. In an embodiment, the gesture progression may be predicted using a model trained using plurality of predefined frames associated with plurality of predefined hand gestures. The model may be a neural network model, configured to predict the gesture progression for each of the sequence of frames. Each of the plurality of predefined hand gestures may be associated with respective video representing corresponding hand gesture. The video may include plurality of frames, which may be used as the plurality of predefined frames for training the model. Using the spatio-temporal features as input to the model, the gesture progression is predicted and gesture category is determined.One or more techniques, known to a person skilled in the art, may be implemented in the model, for predicting the gesture progression.

The gesture class for a frame may indicate gesture associated with hand pose recognized in the frame. The gesture class may be identified using a classification model trained using the plurality of predefined hand gestures and corresponding gesture class. In an embodiment, the classification model may be trained to classify the hand pose to be associated with gesture class of one of the plurality of predefined hand gestures. Using the spatio-temporal features as input to the classification model, the gesture class may be predicted. One or more techniques, known to a person skilled in the art, may be implemented in the classification model, for predicting the gesture class. Some of said techniques, may be, but not limited to, logistic regression, stochastic gradient decent, decision tree and so on.

Upon predicting the gesture progression and the gesture class for a frame from the sequence of frames, the event triggering system 101 is configured to identify the gesture progression and the gesture class of the frame to be associated with a predefined hand gesture. In an embodiment, the gesture class for the frame is identified to be associated with the predefine hand gesture by, initially, selecting a threshold value for the gesture progression. The threshold value may be selected depending on the predicted gesture class. In an embodiment, gesture class of each of the plurality of predefined hand gestures, may be associated with a predefined threshold value. The predefined threshold value indicates a threshold relating to progression of the hand gesture. In real-time, for the frame, when the gesture class is identified, the predefined threshold value corresponding to the gesture class may be selected as the threshold value of the frame. Upon selecting the threshold value, the predicted gesture progression may be compared with the threshold value. When the gesture progression is greater than the threshold value, an event in the vehicle is triggered. In an embodiment, the predefined hand gesture is identified based on the predicted gesture class. When the gesture progression for the frame is lesser than the threshold value, subsequent frame is processed for predicting the gesture progression level and the gesture class. Further, said identification is performed for the subsequent frame as well. The steps of the prediction and the identification are performed for subsequent frames, until corresponding gesture progression is identified to be greater than respective threshold value.

The event is associated with the predefined hand gesture. Each of the plurality of predefined hand gestures may be associated with an event to be executed in the vehicle. The event includes one or more operations that may be manually performed by at least one of the driver and the passenger in the vehicle. For example, the one or more operations may include opening of window on driver/passenger side, controlling infotainment system of the vehicle, activating child lock, and so on. At least one of such one or more operations may be triggering and performed as the event in the present disclosure. Need for the driver/passenger to manually perform the one or more operations may be eliminated using the present disclosure. Any operations in the vehicle, which may be triggered using a hand gesture may be considered as events in the present disclosure. Each of such events may be associated with a predefined hand gesture. The event triggering system 101 is implemented to predict the hand gesture, in real-time and perform the event corresponding to the hand gesture, dynamically.

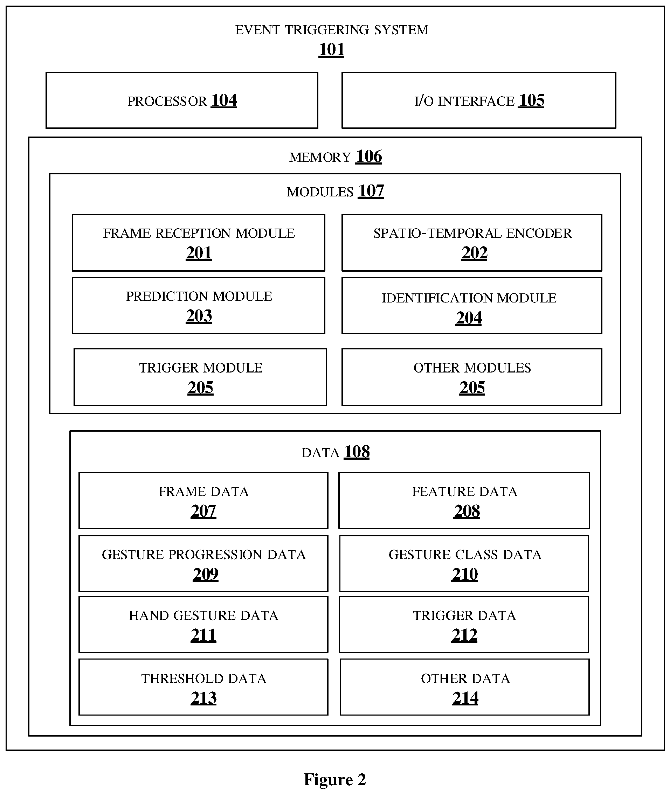

**Figure 2** shows a detailed block diagram of the event triggering system 101 for triggering an event in the vehicle. The data 108 in the memory 106 and the one or more modules 107 of the event triggering system 101 may be described herein in detail.

In one implementation, the one or more modules 107 may include, but are not limited to, a frame reception module 201, a spatio-temporal encoder 202, a prediction module 203, an identification module 204, a trigger module 205 and one or more other modules 205, associated with the event triggering system 101.

The data 108 in the memory 106 may comprise frame data 207 (also referred to as sequence of frames 207), feature data 208 (also referred to as spatio-temporal features 208), gesture progression data 209, gesture class data 210, hand gesture data 211, trigger data 212, threshold data 213 and other data 214 associated with the event triggering system 101.

The event triggering system 101 may receive data for triggering the event in the vehicle through the I/O interface 105. The received data may include, but is not limited to, at least one of the sequence of frames 207, plurality of predefined hand gesture along with corresponding gesture class, predefined threshold values and so on. Also, the event triggering system 101 may transmit data, for triggering the event, via the I/O interface 105. The transmitted data may include, but is not limited to, at least one of spatio-temporal features 208, gesture progression, gesture class, trigger data 212 and so on.

The data 108 in the memory 106 may be processed by the one or more modules 107 of the event triggering system 101. The one or more modules 107 may be implemented as dedicated units and when implemented in such a manner, said modules may be configured with the functionality defined in the present disclosure to result in a novel hardware. As used herein, the term module may refer to an Application Specific Integrated Circuit (ASIC), an electronic circuit, a Field-Programmable Gate Arrays (FPGA), Programmable System-on-Chip (PSoC), a combinational logic circuit, and/or other suitable components that provide the described functionality.

By implementing the event triggering system 101 in a vehicle, the vehicle may provision automation in performing certain events. The automation may be achieved via hand gestures. Plurality of predefined hand gestures are mapped with events in the vehicle. In an embodiment, information associated with the plurality of predefined hand gestures mapped with the events, may be stored as hand gesture data 211 in the memory 106. The hand gesture data 211 may vary with respect to model/ features of the vehicle. In an embodiment, the hand gesture data 211 may be vary based on requirement of owner of the vehicle.

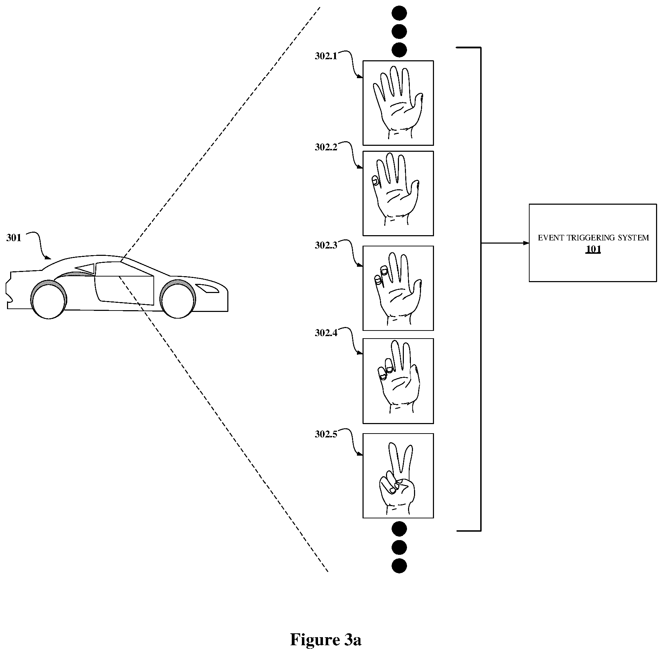

At least one of the driver and the passenger may be aware of the plurality of predefined hand gestures which aid in triggering the events in the vehicle. Accordingly, to trigger a particular event, at least one of the driver and the passenger may perform one of the plurality of predefined hand gestures, corresponding to the particular event. Video of hand gesture performed by at least one of the driver and the passenger is captured by the video capturing unit 102. The video may be captured inside a vehicle 301, in real-time, as shown in **Figure 3a.** The video includes the sequence of frames 207 representing the hand gesture. In an embodiment, the frame reception module 201 may be configured to receive each of the sequence of frames 207 sequential from the video capturing unit 102. In an embodiment, number of frames in the sequence of frames 207, considered by the frame reception module 201 may be predefined. In an embodiment, the sequence of frames 207 may be selected from the video. The sequence of frames 207 may include starting frame of the video to last frame of the video. However, each of the sequence of frame includes static hand poses, which to constitute to represent the hand gesture.

Consider a hand gesture is performed by a driver in the vehicle 301. Sequence of frames 207 of the hand gesture may be represented as sequence of frames 302.1....302.5, as shown in **Figure 3a.** The sequence of frames 302.1....302.5 may be received by the event triggering system 101. Number of the sequence of frames 302.1....302.5 is five. The number of frames of sequence of frames 207 may vary based on hand gesture performed inside the vehicle 301.

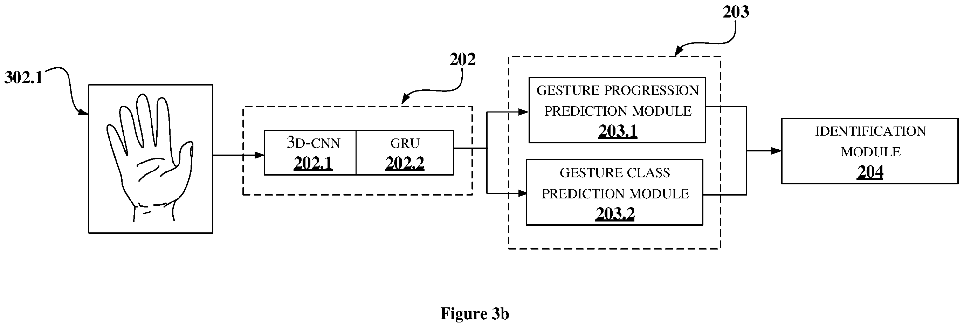

Each of the sequence of frames 207 may be processing using one or more modules 107 of the event triggering system 101. Consider a frame 302.1 from the sequence of frames 302.1....302.5, as shown in **Figure 3b.** Initially, the spatio-temporal encoder 202 of the event triggering system 101 may be configured to extract the spatio-temporal features 208 from each of the sequence of frames 207. In an embodiment, the spatio-temporal features 208 for the sequence of frames 207 may be extracted in the sequential manner. The frame 302.1, being first frame of the sequence of frames 302.1....302.5, is processed first. The spatio-temporal encoder 202 is configured to extract the spatio-temporal features 208 of the frame 302.1.

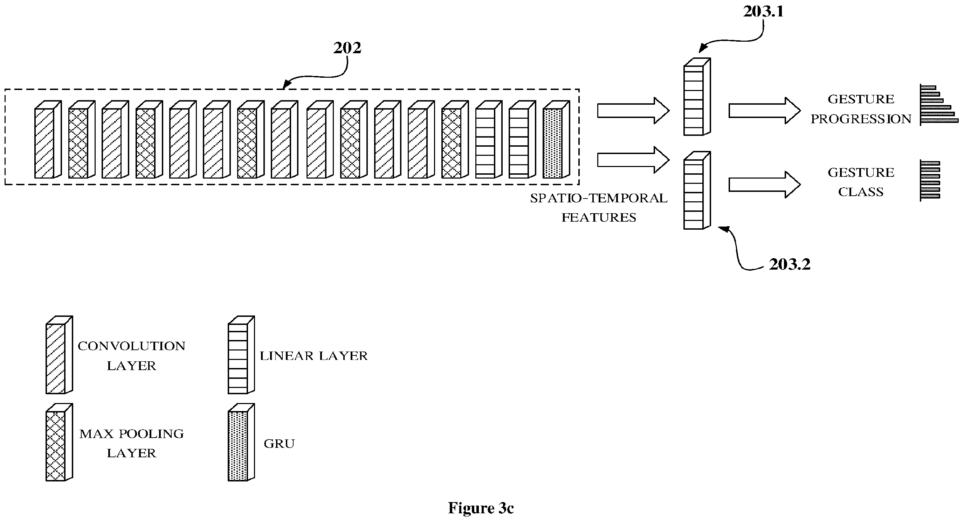

In an embodiment, the spatio-temporal encoder 202 includes a 3D-CNN 202.1 and a GRU 202.2. **Figure 3c** illustrates an exemplary architecture of the spatio-temporal encoder 202 comprising the 3D-CNN 202.1 and the GRU 202.2. The 3D-CNN 202.1 may be including one or more 3D convolution layers 205, where each of the one or more 3D convolution layers 205 is followed by a maximum pooling layer connected in series before a linear layers and the GRU 202.2. The one or more 3D convolution layers 205 may perform 3D convolution in spatial and temporal domains using a multi-dimensional kernel. The linear layer may apply non-linear mapping of input data into another space and may comprise a Rectified Linear Unit (ReLU) that maps negative inputs to zero, and positive inputs to their original value. The maximum pooling layer may apply a down-sampling operator to reduce spatial and temporal dimensions of internal multi-dimensional tensor. In one embodiment, the maximum pooling layer may implement a maximum operator that, for every non-overlapping grid of $2 \times 2 \times 2$, elements produces only a single value of the sub-tensor equal to the maximum value. In an embodiment, grids may be of size $2 \times 2 \times 1$, $1 \times 2 \times 2$, $2 \times 1 \times 2$, $1 \times 1 \times 2$, $2 \times 1 \times 1$, $1 \times 2 \times 1$, and so on, where first two dimensions describe size in spatial domain, and third dimension describe size in temporal domain. The GRU 202.2 may be implemented to provision gating mechanism in the spatio-temporal encoder 202. The 3D-CNN 202.1 and the GRU 202.2 are configured to extract the spatio-temporal features 208 of the sequence of frames 207. Using such architecture of the spatio-encoder 202, the spatio-temporal features 208 of the frame 302.1 are extracted.

Upon extracting the spatio-temporal features 208, the prediction module 203 is configured to predict the gesture progression and the gesture class associated to each of the sequence of frames 207, based on the spatio-temporal features 208. In an embodiment, two separate modules are implemented for predicting each of the gesture progression and the gesture class. As shown in **Figure 3b,** for the frame 302.2, the prediction module 203 includes a gesture progression prediction module 203.1 and a gesture class module 203.2. The gesture progression prediction module 203.1 is configured to predict the gesture progression of each of the sequence of frames 207, in other words this branch learns to predict progress of a gestures without actually recognizing the class. The gesture class module 203.2 is configured to determine the gesture class of the each of the sequence of frames 207, by means of this further branch the class of the gesture is determined. In an embodiment, each of the gesture progression prediction module 203.1 and the gesture class module 203.2 include trained models for predicting the gesture progression and the gesture class, respectively.

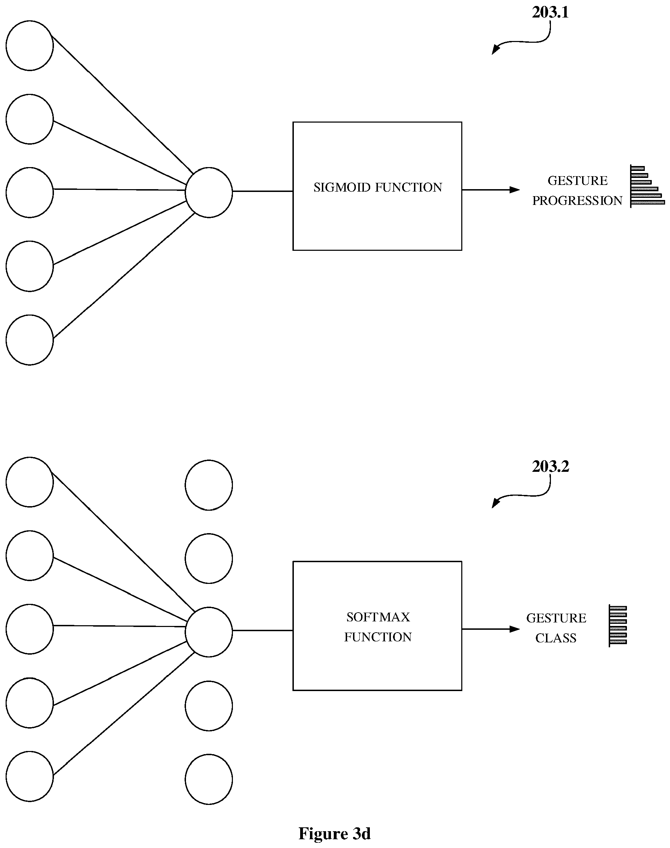

The gesture progression prediction module 203.1 may include a model trained using the plurality of predefined frames associated with the plurality of predefined hand gestures. In an embodiment, output of the gesture progression prediction module 203.1 indicates rate of progression of the hand gesture with respect to previous frames in the sequence of frames 207. The gesture progression of a frame from the sequence of frames 207 may be formulated as ratio of gesture that has been completed at that moment. For example, for the frame 302.1, the gesture progression may be outputted as 20%, since the frame 302.1 is the first frame. Likewise, for frame 302.2, the gesture progression may be outputted as 40%, and so on. Consider another example for sequence of frames 207 with length being six. The gesture progression of first frame may be 1/6, the gesture progression of second frame may be 2/6 and so on. Last frame of the sequence of frames 207 may output gesture progression of 6/6. The gesture progression prediction module 203.1 may be configured to connect output of the spatio-temporal encoder 202 to a single output, as shown in **Figure 3d.** In an embodiment, the gesture progression prediction module 203.1 may be 1024 X 1. In an embodiment, the output may be fed to a sigmoid function to constrain it between 0 to 1.

The gesture class module 203.2 may include a classification model trained using the plurality of predefined hand gestures and corresponding gesture class. In an embodiment, the classification model may be trained to classify the hand pose to be associated with gesture class of one of the plurality of predefined hand gestures. Output of the gesture class prediction module 203.2 may indicate the gesture class of each of the sequence of frames 207. The gesture class prediction module 203.2 may be configured to connect the output of the spatio-temporal encoder 202 to number of categories of the plurality of predefined hand gestures. Thus, size of the gesture class prediction module 203.2 may be 1024 X number of gesture classes. The output may be fed to a SoftMax function to convert the output of each of the sequence of frames 207 into probabilities. Hence, output of the gesture class module 203.2 may be in form of probability score of each of the sequence of frames 207, indicating probability of a frame to be associated with a particular gesture class e.g. "swipe right" or "swipe left" .

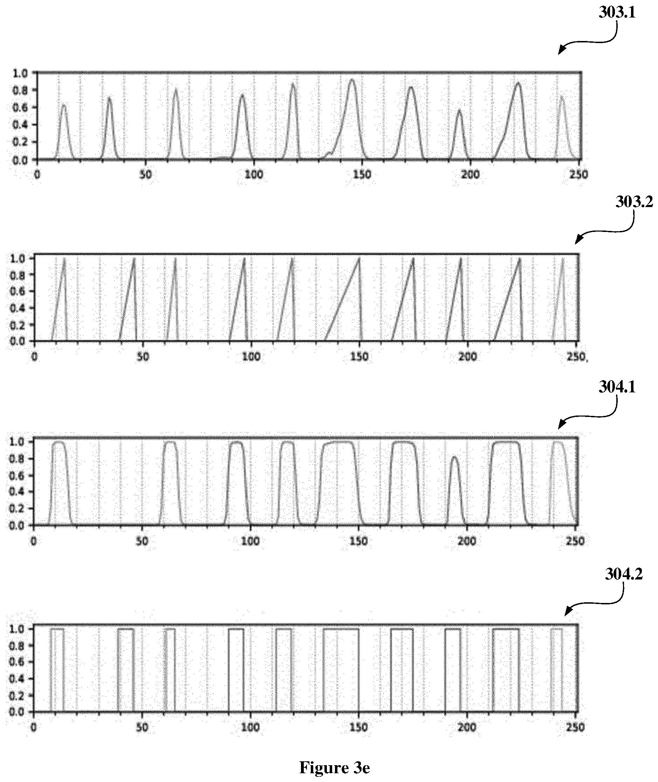

The gesture progression prediction module 203.1 and the gesture class module 203.2 may be implemented using linear layers, as shown in **Figure 3c.** Models in the the gesture progression prediction module 203.1 and the gesture class module 203.2 may be a linear fully connected layers. In an embodiment, the model in the gesture progression prediction module 203.1 may be trained using Mean Square Error (MSE). In an embodiment, the classification model of the gesture class module 203.2 may be trained using cross entropy error. For the training, estimated values and ground truth associated with the gesture progression and the gesture class for the plurality of predefined frame of the plurality of predefined hand gestures may be plotted. **Figure 3e** illustrates exemplary plots representing the estimated values and the ground truth associated with the gesture progression and the gesture class. Plot 303.1 represents the estimated values of the gesture progression and plot 303.2 represent the ground truth of the gesture progression. Plot 304.1 represents the estimated values of the gesture class and plot 304.2 represent the ground truth of the gesture class. The x-axis shows time in seconds. The y-axis of 303.1 and 303.2 shows gesture progression prediction and corresponding ground truth the y-axis of 304.1 and 304.2 shows classification and corresponding ground truth. The prediction may be completed at a predetermined, configurable stage. The prediction may completed at a trigger point of 75% for some gestures, for others 100% would be appropriate. The trigger point may be tuned in a way, that the method used in a car provides optimized results.

For training the model of the gesture progression prediction module 203.1, using the MSE, average squared difference between the estimated values and the ground truth values are determined. The average squared difference may be determined using equation 1 given below:

$$A = \frac{1}{n}\sum_{i=1}^{n}(Y_i - Y_i')^2 \dots\dots\dots (1)$$

where A is the averaged squared difference;
n is number of data points;

$Y_i$ represent the ground truth of the gesture progression; and

$Y_i'$ represents the estimated values of the gesture progression

Further, for training the classification model of the gesture class prediction module 203.2, using the cross-entropy error, difference between the estimated values and the ground truth of the gesture class may be determined. For example, consider a frame, from the sequence of frames 207, is to be classified between first gesture class C1 and second gesture class C2. While training, the classification model may output probability with which the given frame may belongs to C1 or C2 as 0.4 and 0.6, respectively. Now loss or error may be defined using equation 2 given below:

$$H(P, Q) = -\sum_{i=(C1,C2)} P(i) \log Q(i) = -P(C1) \log Q(C1) - P(C2) \log Q(C2) \dots\dots\dots (2)$$

where, P stands for the ground truth probability of the gesture class; and
Q stands for the estimated values probability of the gesture class.

For the above example, consider the frame belongs to C1. Hence, P(C1) may be 1 and the P(C2) may be 0. As given, Q(C1) is 0.4 and Q(C2) is 0.6.

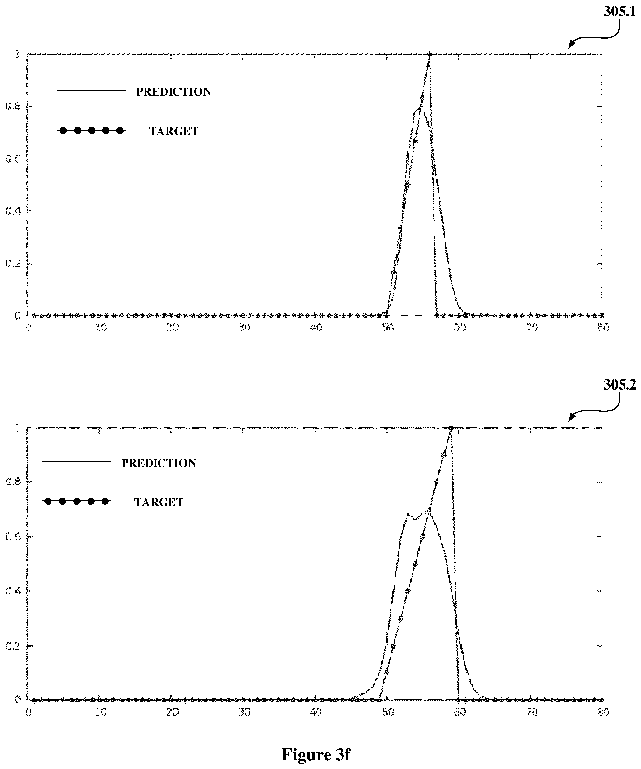

By performing the training of the model of the gesture progression prediction module 203.1 and the classification model of the gesture class module 203.2, target may be set for the gesture progression and the gesture class of each of the plurality of predefined hand gestures. In the real-time, for a frame, the gesture progression and the gesture data may be accurately predicted by comparing predicted values and corresponding target. **Figure 3f** illustrates plots representing comparison of the predicted values with target for the gesture progression and the gesture class. Plot 305.1 represents the comparison of the predicted values of the gesture progression in real-time, with the target associated with the gesture progression. Plot 305.2 represents the comparison of the predicted values of the gesture class in real-time, with the target associated with the gesture class. By such comparison, accurate prediction of the gesture progression and the gesture class may be achieved. Referring back to **Figure 3b,** by using the proposed gesture progression prediction module 203.1 and the gesture class module 203.2, the gesture progression and the gesture class may be predicted for the frame 302.1. The gesture progression may be predicted to be 1/5 or 20% and the gesture class may be predicted to be first class of gesture (which may be corresponding to hand pose in the frame 302.1).

Upon predicting the gesture progression and the gesture class an event in the vehicle, based on the detected hand gesture class and the gesture progression level is triggered, as soon as a predetermined threshold of gesture progression is reached. The hand gesture class is detected by predicting further gestures based on detected frames of features so far, i.e. based on detected frames up to a predetermined threshold of gesture progression, a gesture like swiping or waving is predicted.. The predefined hand gesture e.g. swiping may be selected from the plurality of hand gestures associated with a event in the vehicle. Consider the frame 302.1 for which the gesture progression is predicted and the gesture class is determined. The identification may be performed by the identification module 204 using the predicted gesture progression and the gesture class. Initially, using the gesture class a threshold value may be selected for the predicted gesture progression. In Oan embodiment, the gesture class of each of the predefined of hand gestures, may be associated with a predefined threshold value. The predefined threshold value may indicate a threshold for progression of the hand gesture. Said predefined threshold value associated with gesture class of each of the plurality of predefined hand gestures, may be stored as the threshold data 213 in the memory 106. The predefined threshold value may be selected such that, for the progression of the hand gesture, which is beyond the predefined threshold value, event associated with the hand gesture needs to be performed. In some scenarios, it may be required that the event is to be triggered as soon as 5% of the gesture progression is predicted. In some other scenarios, it may be required that the event is to be triggered after 80% of gesture is complete, i.e., 80% of the gesture progression is predicted. For example, consider a hand gesture of touching middle finger and thumb is associated with an event of opening a window. Predefined threshold value for gesture class for such hand gesture may be defined to be 60 %. That is, when the gesture progression of sequence of frames 207 of such hand gesture reaches greater than 60%, the event of opening the window may be triggered. Likewise, each of the plurality of predefined hand gestures may be associated with the predefined threshold value. In an embodiment, the predefined threshold value may be selected by an expert during designing of the event triggering system 101. In an embodiment, based on the training performed for the gesture progression prediction module 203.1 and the gesture class module 203.2, the predefined threshold value may be assigned to each of the plurality of predefined hand gestures. By setting the predefined threshold value for each of the plurality of predefined hand gestures, time at which event is to be triggered may be configured. In some embodiments, the predefined threshold value may be set differently for different gestures depending upon the criticality of action associated with each of the gestures. The predefined threshold value may be tuned even after models are trained and deployed in the vehicle. By enabling tuning, a small development cycle and easy configurability may be achieved. Also, time required for training the models for different threshold value may be reduced.

In real-time, upon selecting the threshold value based on the gesture class as described above, the predicted gesture progression may be compared with the threshold value. When the gesture progression is greater than the threshold value, the gesture progression and the gesture class may be identified to be associated with the predefined hand gesture. The predefined hand gesture may be identified based on the predicted gesture class. When the gesture progression for the frame is lesser than the threshold value, subsequent frame is processed for predicting the gesture progression and the gesture class. For the frame 302.1, consider the threshold value for the first class of gesture is 75%. Since the gesture progression is 20%, the subsequent frame i.e., the frame 302.2 may be processed to extract features and predict gesture progression and to determine gesture class for the frame 302.2. The predicted gesture progression and the gesture class is used for the identification. In case, the predicted gesture progression is lesser than the threshold value, frame 302.3 is processed.

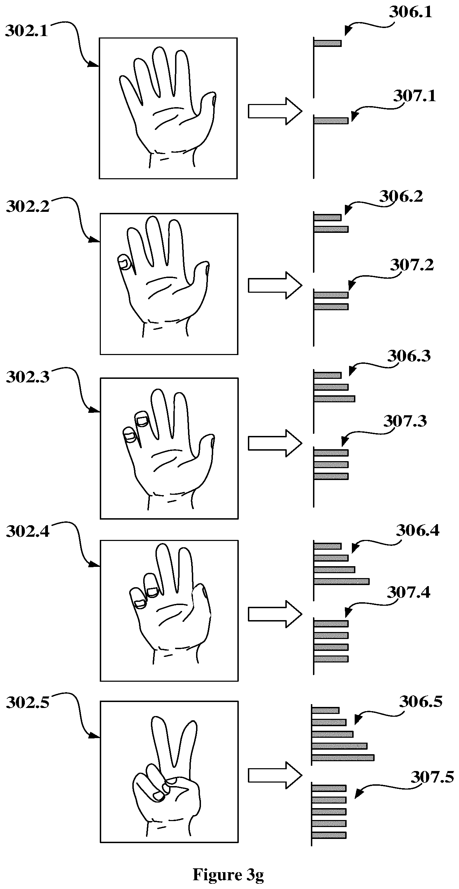

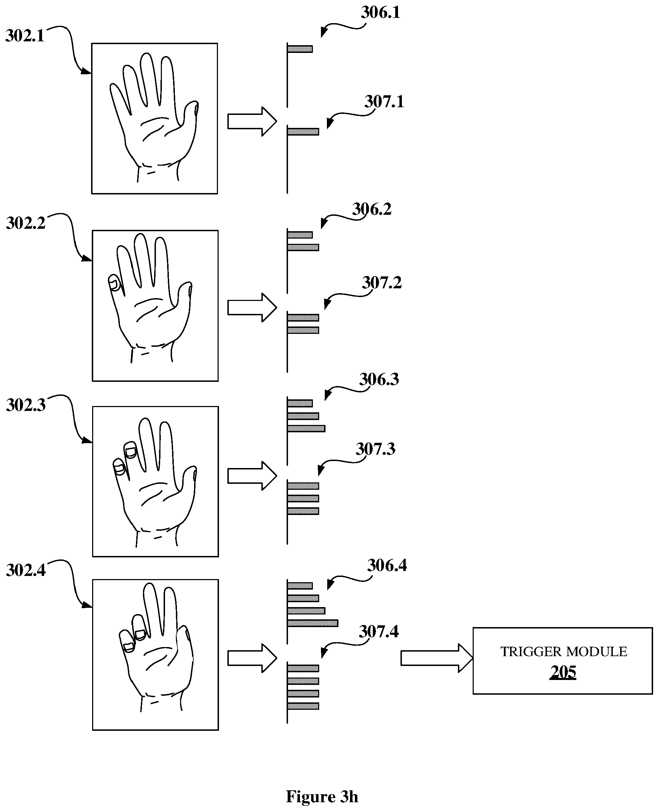

The predicted gesture progression and the gesture class for the sequence of frames 302.1......302.4 may be represented as shown in **Figure 3g.** The frame 302.1 is associated with gesture progression 306.1 and gesture class 307.1. Output of the prediction module 203 for the frame 302.2 may be gesture progression 306.2 and gesture class 307.2. The gesture progression 306.2 may indicate progression of gesture with respect to previous frame i.e., the frame 302.1. The gesture class 307.2 may indicate gesture class of hand pose in the frame 302.2 along with class of the previous frame i.e., the frame 302.1. Output of the prediction module 203 for the frame 302.3 may be gesture progression 306.3 and gesture class 307.3. Output of the prediction module 203 for the frame 302.4 may be the gesture progression 306.4 and gesture class 307.4. Output of the prediction module 203 for the frame 302.5 may be the gesture progression 306.5 and gesture class 307.5. In an embodiment, the gesture progression predicted for the sequence of frames 207 may be stored as the gesture progression data 209 in the memory 106. In an embodiment, the gesture class predicted for the sequence of frames 207 may be stored as the gesture class data 210 in the memory 106. Upon determining the gesture progression and the gesture class of the each of the sequence of frames 207, an event in the vehicle associated with the gesture class is triggered as soon as a predetermined threshold of gesture progression is reached. As shown in **Figure 3h,** consider for frames 302.1, 302.2 and 302.3, the gesture progression is lesser than corresponding threshold value. The gesture progression for the frame 302.4 is 80% which is greater than the threshold value of 75%, the gesture class associated with hand pose in the frame 302.4 is used for identifying the predefined hand gesture. Further, the identification module 204 communicates the predefined hand gesture with the trigger module 205. Since, the gesture progression for the frame 302.4 is greater than the threshold value, the frame 302.5 may not be received and processed.

The trigger module 205 may be configured to trigger an event in the vehicle based on the predefined hand gesture. For the hand gesture represented in the sequence of frames 302.1......302.5, the event associated with the hand gesture may be to open/turn on infotainment system of the vehicle. Once the frame 304.4 is processed and the hand gesture is identified, the trigger module 205 may be configured to switch ON the infotainment system. Said event is triggered even before completion of the hand gesture, i.e., even before the frame 302.4 is received and processed. By the proposed disclosure, the hand gesture may be detected even before the completion of the hand gesture, in real-time. Early prediction of the hand gesture may be possible with accurate triggering of event. Information associated with the predefined hand gesture along with corresponding event may be stored as the trigger data 212 in the memory 106. In an embodiment, the trigger data 212 may include information on trigger that to be initiated by the trigger module 205.

The event triggered by the trigger module 205 may be associated with notification or warning which are to be provided to the driver or the passenger. For example, if the hand gesture is identified to be a driver trying to reach out for something on back seat/side seat during driving, even before the driver completely turns to the back seat/side seat, the trigger module 205 may be configured to warn the driver that it may get dangerous and to focus back on road. Consider another example where the driver is trying to dial a number on phone. Upon identifying the hand gesture, the trigger module 205 may be configured to notify the driver that it may be dangerous to use phone when driving and suggest automatic dialing to the driver. Consider another example where the passenger is identified to be taking off seatbelt when the vehicle is moving. The trigger module 205 may be configured to warn the passenger to keep the seat belt intact, before the passenger actually takes the seatbelt off. By configured such hand gestures and event by the event triggering system 101, safety of the driver and the passenger may be ensured.

The other data 214 may store data, including temporary data and temporary files, generated by modules for performing the various functions of the event triggering system 101. The one or more modules 107 may also include other modules to perform various miscellaneous functionalities of the event triggering system 101. It will be appreciated that such modules may be represented as a single module or a combination of different modules.

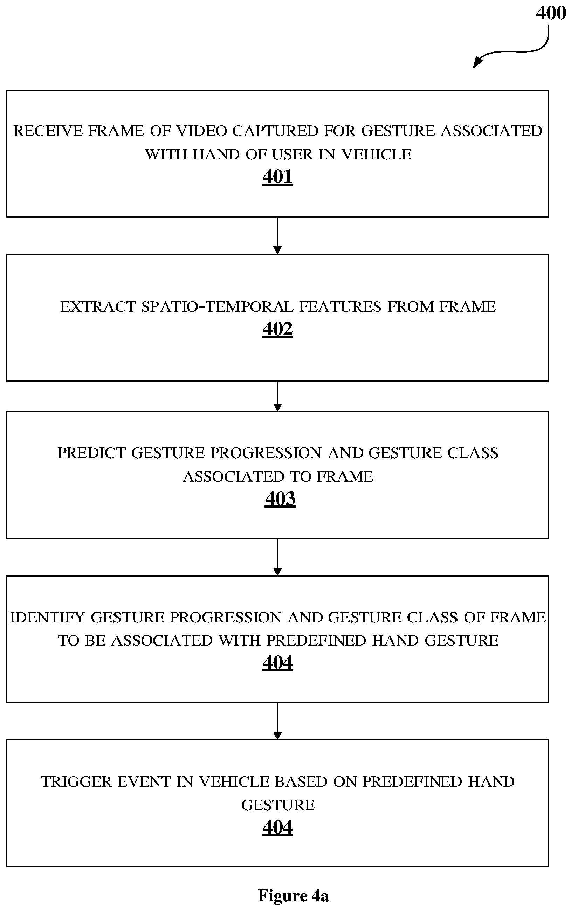

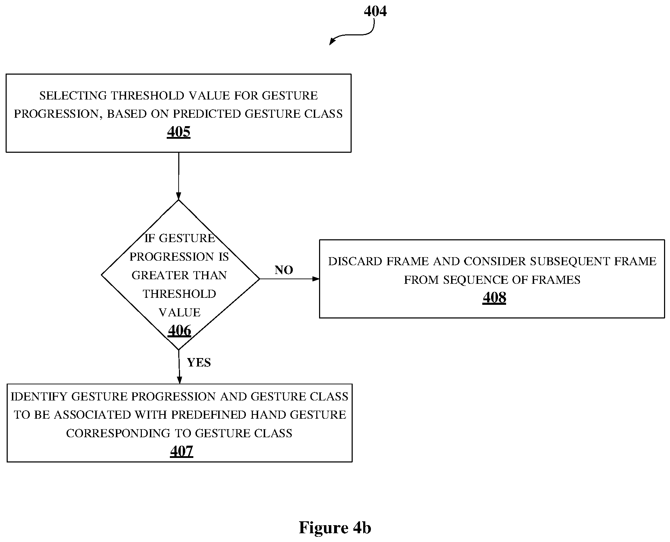

**Figure 4** comprising **Figure 4a** and **4b** illustrates a flowchart showing an exemplary method for triggering the event in the vehicle, based on the hand gesture, in accordance with some embodiments of present disclosure.

The event triggering system 101 proposes early prediction of hand gesture and triggering of event associated with the hand gesture. Even before driver/passenger completes to perform the hand gesture, the event triggering system 101 is configured to capture movement of hand and identify the hand gesture. Frames representing movement of hand may be received in a sequential manner, and steps illustrated in **Figure 4** may be performed for each of the frames.

At block 401 of **Figure 4a** is disclosed the step of receiving an incoming stream of frames from the camera placed in the vehicle. The frame reception module 201 of the event triggering system 101, may be configured to receive a frame from the sequence of frames 207 of the video of the hand gesture in the vehicle. In an embodiment, each of the sequence of frames 207 may be received dynamically by the frame reception module 201 in a sequential manner.

At block 402 is disclosed the step of extracting spatio temporal features from the spatio temporal encoder. The spatio-temporal encoder 202 of the event triggering system 101 may be configured to extract the spatio-temporal features of the frame. In an embodiment, the spatio-temporal encoder 202 includes the 3D-CNN 202.1 and the GRU 202.2. The 3D-CNN 202.1 and the GRU 202.2 may be connected in series with other, to extract the spatio-temporal features. One or more other techniques, known to a person skilled in the art, may be implemented to extract the spatio-temporal features.

At block 403 is disclosed the step of predicting the gesture progression level and gesture class associated for each frame. The prediction module 203 of the event triggering system 101 are configured to predict the gesture progression and to determine the gesture class associated with the frame. The spatio-temporal features 208 are used for predicting the gesture progression and determining the gesture class. In an embodiment, the gesture progression for the frame indicates rate of progression of the predefined hand gesture with respect to previous frames in the sequence of frames 207. In an embodiment, the gesture class for the frame indicates gesture associated with hand pose recognized in the frame.

At block 404 is disclosed the step of triggering the event in vehicle associated with the gesture class since the gesture progression crosses a predefined threshold. The identification module 204 of the event triggering system 101 is configured to identify the predefined hand pose associated with the determined gesture class of the frames, as soon as a predetermined threshold of gesture progression is reached. The triggering system 101 triggers an event associated with the predefined hand pose. The predefined hand pose may be selected amongst the plurality of predefined hand gestures.

**Figure 4b** illustrates a flowchart showing an exemplary method for identifying the gesture progression and the gesture class to be associated with the predefined hand gesture.

At block 405, the identification module 204 of the event triggering system 101 may be configured to select the threshold value for the gesture progression of the frame. The threshold value may be selected based on the gesture class of the frame or frames.

At block 406, the identification module 204 of the event triggering system 101 may be configured to compare the threshold value with the gesture progression of the frame. When the gesture progression is greater than the threshold value, the identification module 204 may be configured to perform step in block 407. When the gesture progression is lesser than the threshold value, the identification module 204 may be configured to perform step in block 408.

At block 407 is disclosed the step of triggering the event in the car, which is associated with the detected gesture class. Upon identifying the gesture progression to be greater than the threshold value, the identification module 204 of the event triggering system 101 may be configured to identify the gesture class to be associated with the predefined hand gesture. The predefined hand gesture which is selected from the plurality of predefined hand gestures, may be selected based on the gesture class of the frame.

At block 408, upon identifying the gesture progression to be lesser than the threshold value, the identification module 204 of the event triggering system 101 may be configured to discard the frame and consider the subsequent frame from the sequence of frames 207.. The steps of blocks 401 to 404 of **Figures 4a** and steps of blocks 405, 406 and 408 of **Figure 4b** may be performed for subsequent frame of the sequence of frames 207. Said steps may be performed until gesture progression of one of the sequence of frames 207 is determined to be greater than corresponding threshold value.

As illustrated in **Figures 4** and **4b,** the methods 400 and 404 may include one or more blocks for executing processes in the event triggering system 101. The methods 400 and 404 may be described in the general context of computer executable instructions. Generally, computer executable instructions can include routines, programs, objects, components, data structures, procedures, modules, and functions, which perform particular functions or implement particular abstract data types.

The order in which the methods 400 and 404 are described may not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

The present disclosure proposes to predict progression of hand gesture along with gesture class, enabling early identification of hand gesture. Even before the completion of hand gesture by driver/passenger, accurate identification may be achieved.

The present disclosure requires lesser computational time since the hand gestures are predicted even before the hand gestures in real-time. The need for capturing all the frames of video of the hand gesture and processing all the frame to identify the hand gesture is eliminated.

The present disclosure provisions better user experience. Along with automating operation in the vehicle, safety of driver/passenger may also be ensured using the proposed event triggering system.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an example with several components in communication with each other does not imply that all such components are required. On the contrary a variety of optional components are described to illustrate the wide variety of possibilities.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs.

The illustrated operations of **Figures 4a** and **4b** shows certain events occurring in a certain order. Certain operations may be performed in a different order, modified, or removed. Moreover, steps may be added to the above described logic. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. The disclosure of the embodiments of the invention is intended to be illustrative, but not limiting, of the scope of the invention, which is set forth in the following claims.

While various aspects and embodiments have been disclosed herein, other aspects will be apparent to those skilled in the art. The various aspects and embodiments disclosed herein are for purposes of illustration, with the true scope being indicated by the following claims.

**Claims**

1.    A method for triggering an event in a vehicle, using a gesture carried out by hand comprising:

    receiving a sequence of frames of a video captured for a gesture associated with a user in a vehicle;
    extracting spatio-temporal features from the sequence of frames using a spatio-temporal encoder, wherein the spatio-temporal encoder comprises a 3-Dimensional Convolutional Neural Network (3D-CNN) (202.1) and a Gated Recurrent Unit (GRU) (202.2);
    by means of a prediction module (203) using the spatio-temporal features as input, simultaneously predicting a progression level of the gesture, and determining a gesture class for each of the frames comprised by the sequence of frames in a sequential manner, 15 wherein the progression level of the gesture for a frame indicates a rate of progression of a predefined gesture with respect of previous frames in the sequence of frames, andwherein the prediction module (203) incorporates a gesture progression prediction module (203.1) in a first branch using a trained neural network model associated with a plurality of predefined hand gestures configured to predict the gesture progression for each of the sequence of frames
    and a gesture class module (203.2) in a second branch using a trained classification model configured to classify the hand pose to be associated with a gesture class of one of the plurality of predefined hand gestures; and
    triggering an event in the vehicle, based on the detected gesture class and the gesture progression level, as soon as a predetermined threshold of gesture progression is reached.

2.    The method as claimed in claim 1, wherein the threshold value is set differently for different gesture classes of each of the plurality of the predefined hand gestures.

3.    The method as claimed in claim 1, wherein the gesture class for a frame indicates gesture associated with a user recognized in the frame.

4.    An event trigging system for triggering an event in a vehicle, using a gesture, preferably a hand gesture, comprises:

a processor; and
a memory communicatively coupled to the processor, wherein the memory stores processor-executable instructions, which, on execution, cause the processor to perform the steps of method as claimed in preceding claims 1-3.

**Patentansprüche**

1. Verfahren zur Auslösung eines Ereignisses in einem Fahrzeug unter Anwendung einer Handgeste, umfassend:

   den Empfang einer Folge von Einzelbildern eines Videos, das für eine mit einem Benutzer im Fahrzeug verbundene Geste aufgenommen wurde;
   die Entnahme von raum-zeitlichen Merkmalen aus der Folge von Einzelbildern unter Anwendung eines raum-zeitlichen Codierers, wobei der raum-zeitliche Codierer ein dreidimensionales konvutionelles neuronales Netzwerk (3D-CNN) (202.1) und eine Gated Recurrent Unit (GRU) (202.2) umfasst;
   mittels eines Voraussagemoduls (203) unter Anwendung der raum-zeitlichen Merkmale als Eingabe die gleichzeitige Voraussage eines Verlaufniveaus der Geste und die Bestimmung einer Gestenklasse für jedes Einzelbild der Folge von Einzelbildern auf sequenzielle Art und Weise, wobei das Verlaufniveau der Geste für ein Einzelbild eine Verlaufsrate einer vorgegebenen Geste in Bezug auf frühere Einzelbilder in der Folge von Einzelbildern andeutet, und wobei das Voraussagemodul (203) ein Gestenverlauf-Voraussagenodul (203.1) in einem ersten Zweig beinhaltet, das zur Voraussage des Gestenablaufs für jede Folge von Einzelbildern ein geschultes neuronales Netzwerkmodell benutzt, das mit einer Vielzahl von vorgegebenen Handgesten verbunden ist,
   sowie ein Gestenklassemodul (203.2) in einem zweiten Zweig, das ein geschultes Klassifikationsmodul benutzt, das zur Klassifizierunng der Handhaltung ausgelegt ist, die mit einer Gestenklasse von einer aus der Vielzahl von vorgegebenen Handgesten zu verbinden ist; und
   die Auslösung eines Ereignisses im Fahrzeug auf der Basis der erfassten Gestenklasse und des Gestenverlaufniveaus, sobald eine vorgegebene Gestenverlaufschwelle erreicht ist.

2. Verfahren nach Anspruch 1, wobei der Schwellenwert für unterschiedliche Gestenklassen einer jeden aus der Vielzahl von vorgegebenen Handgesten unterschiedlich eingestellt wird.

3. Verfahren nach Anspruch 1, wobei die Gestenklasse für ein Einzeilbild eine Geste andeutet, die mit einem im Einzelbild erkannten Benutzer verbunden ist.

4. Ereignisauslösungssystem zur Auslösung eines Ereignisses in einem Fahrzeug unter Anwendung einer Geste, vorzugsweise einer Handgeste, umfassend:

   einen Prozessor; und
   einen zur Kommunikation an den Prozessor gekoppelten Speicher, wobei der Speicher vom Prozessor ausführbare Anweisungen speichert, die bei Ausführung den Prozessor zur Durchführung der Verfahrensschritte nach einem der vorhergehenden Ansprüche 1-3 veranlassen.

**Revendications**

1. Procédé destiné à déclencher un événement dans un véhicule, à l'aide d'un geste de la main consistant à :

   recevoir une séquence d'images d'une vidéo capturée par un geste associé à un utilisateur dans un véhicule ;
   extraire des caractéristiques spatio-temporelles à partir de la séquence d'images à l'aide d'un codeur spatio-temporel, le codeur spatio-temporel comprenant un réseau de neurones artificiels à convolution tridimensionnel (3D-CNN) (202.1) et une unité récurrente à barrière (GRU) (202.2) ;

   au moyen d'un module de prédiction (203) faisant appel aux caractéristiques spatio-temporelles comme entrée, prédire simultanément un niveau de progression du geste, et déterminer une classe de geste pour chacune des images comprises par la séquence d'images d'une manière séquentielle,

   dans lequel le niveau de progression du geste pour une image indique un taux de progression d'un geste prédéfini par rapport aux images précédentes dans la séquence d'images, et dans lequel le module de prédiction (203) renferme un module de prédiction de progression de geste (203.1) dans un premier branchement à l'aide d'un modèle de réseau de neurones artificiels entraîné associé à une pluralité de gestes de la main prédéfinis configuré pour prédire la progression du geste pour chaque image de la séquence d'images et un module de classe de geste (203.2) dans un second branchement à l'aide d'un module de classification entraîné configuré pour classer la pose de la main devant être associée à une classe de geste d'un geste de la main parmi la pluralité de gestes de la main prédéfinis ; et

déclencher un événement dans le véhicule, sur la base de la classe de geste détecté et du niveau de progression de geste, dès qu'un seuil prédéterminé de progression du geste est atteint.

2.  Procédé selon la revendication 1, dans lequel la valeur de seuil est définie différemment pour les différentes classes de geste de chaque geste de la main parmi la pluralité de gestes de la main.

3.  Procédé selon la revendication 1, dans lequel la classe de geste pour une image indique un geste associé à un utilisateur reconnu dans l'image.

4.  Système de déclenchement d'événement destiné à déclencher un événement dans un véhicule, à l'aide d'un geste, de préférence d'un geste de la main, comprenant :

    un processeur ; et
    une mémoire couplée en communication avec le processeur, dans lequel la mémoire stocke des instructions pouvant être exécutées par le processeur, qui, lorsqu'elles sont exécutées, amènent le processeur à effectuer les étapes du procédé selon les revendications précédentes 1 à 3.

**100**

EVENT TRIGGERING SYSTEM
**101**

| PROCESSOR **104** | I/O INTERFACE **105** |

MEMORY **106**

| MODULES **107** | DATA **108** |

VIDEO CAPTURING UNIT
**102**

COMMUNICATION NETWORK **103**

**Figure 1**

EVENT TRIGGERING SYSTEM
**101**

| PROCESSOR **104** | I/O INTERFACE **105** |
|---|---|

MEMORY **106**

MODULES **107**

| FRAME RECEPTION MODULE **201** | SPATIO-TEMPORAL ENCODER **202** |
|---|---|
| PREDICTION MODULE **203** | IDENTIFICATION MODULE **204** |
| TRIGGER MODULE **205** | OTHER MODULES **205** |

DATA **108**

| FRAME DATA **207** | FEATURE DATA **208** |
|---|---|
| GESTURE PROGRESSION DATA **209** | GESTURE CLASS DATA **210** |
| HAND GESTURE DATA **211** | TRIGGER DATA **212** |
| THRESHOLD DATA **213** | OTHER DATA **214** |

**Figure 2**

**Figure 3a**

**Figure 3b**

17

Figure 3c

203.1

SIGMOID FUNCTION

GESTURE
PROGRESSION

203.2

SOFTMAX
FUNCTION

GESTURE
CLASS

Figure 3d

Figure 3e

305.1

305.2

Figure 3f

302.1

306.1

307.1

302.2

306.2

307.2

302.3

306.3

307.3

302.4

306.4

307.4

302.5

306.5

307.5

**Figure 3g**

**Figure 3h**

**400**

RECEIVE FRAME OF VIDEO CAPTURED FOR GESTURE ASSOCIATED
WITH HAND OF USER IN VEHICLE
**401**

EXTRACT SPATIO-TEMPORAL FEATURES FROM FRAME
**402**

PREDICT GESTURE PROGRESSION AND GESTURE CLASS
ASSOCIATED TO FRAME
**403**

IDENTIFY GESTURE PROGRESSION AND GESTURE CLASS OF FRAME
TO BE ASSOCIATED WITH PREDEFINED HAND GESTURE
**404**

TRIGGER EVENT IN VEHICLE BASED ON PREDEFINED HAND
GESTURE
**404**

**Figure 4a**

404

SELECTING THRESHOLD VALUE FOR GESTURE
PROGRESSION, BASED ON PREDICTED GESTURE CLASS
**405**

IF GESTURE
PROGRESSION IS
GREATER THAN
THRESHOLD
VALUE
**406**

NO → DISCARD FRAME AND CONSIDER SUBSEQUENT FRAME
FROM SEQUENCE OF FRAMES
**408**

YES

IDENTIFY GESTURE PROGRESSION AND GESTURE CLASS
TO BE ASSOCIATED WITH PREDEFINED HAND GESTURE
CORRESPONDING TO GESTURE CLASS
**407**

**Figure 4b**

**EP 3 895 064 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019251702 A1
- US 2019246036 A1
- US 2016203360 A1